# EUROPÄISCHE PATENTANMELDUNG

(11) **EP 2 987 718 A2**
(43) Veröffentlichungstag der Anmeldung: **24.02.2016**
(21) Anmeldenummer: 15177501.2
(22) Anmeldetag: 20.07.2015
(51) Int. Cl.: B63C 15/00

(54) **BOOTSLAGER**

(30) Priorität: 24.07.2014 AT 505192014
(71) Anmelder: Mühlegger, Werner, 8010 Graz (AT)
(72) Erfinder: Mühlegger, Werner, 8010 Graz (AT)
(74) Vertreter: Patentanwaltskanzlei Hübscher

(57) **Zusammenfassung**

Es wird ein Bootslager mit zwischen sich eine Regalgasse (2) bildenden Regalen aus neben- und übereinander angeordneten Regalfächern (3) und mit einer in der Regalgasse (2) vorgesehenen Bedieneinrichtung einerseits zum Heben und anderseits zum Verschieben einer ein Boot aufnehmenden Kassette (4) in Längsrichtung der Regalgasse (2) und senkrecht dazu beschrieben. Um vorteilhafte Konstruktionsbedingungen zu schaffen, wird vorgeschlagen, dass die Bedieneinrichtung eine an einen Hubtrieb angeschlossene, sich über die Länge der Regalgasse (2) erstreckende Hubbrücke (5) mit einer Längsführung (6) für die Kassette (4) umfasst, dass auf der Hubbrücke (5) wenigstens ein Hilfsrahmen (11) mit einer zur Regalgasse (2) senkrechten Querführung (14) für die Kassette (4) zwischen einer abgesenkten Ruhestellung und einer angehobenen Gebrauchsstellung verschiebbar lagert, wobei die Längsführung (6) in der abgesenkten Ruhstellung die Querführung (14) und in der angehobenen Gebrauchsstellung die Querführung (14) die Längsführung (6) der Höhe nach überragen, und dass zwischen dem Hilfsrahmen (11) und den Regalfächern (3) eine den Hilfsrahmen (11) vertikal gegenüber den Regalfächern (3) abstützende Verriegelungseinrichtung (17) vorgesehen ist.

## Beschreibung

Die Erfindung bezieht sich auf ein Bootslager mit zwischen sich eine Regalgasse bildenden Regalen aus neben- und übereinander angeordneten Regalfächern und mit einer in der Regalgasse vorgesehenen Bedieneinrichtung einerseits zum Heben und anderseits zum Verschieben einer ein Boot aufnehmenden Kassette in Längsrichtung der Regalgasse und senkrecht dazu.

Um Boote platzsparend trocken lagern zu können, ist es bekannt (EP 1 681 233 A1), ein Bootslager in Form von Regalen mit neben- und übereinander angeordneten Regalfächern vorzusehen, in die Boote mit Hilfe eines Regalbediengeräts eingelagert werden. Zur Übergabe der Boote an das Regalbediengerät ist ein Portalkran vorgesehen, der Kassetten zur Aufnahme der Boote ins Wasser absenkt, sodass die Boote über die Kassetten gefahren und mit den Kassette aus dem Wasser gehoben werden können. Über ein Schienensystem können dann die Kassetten mit den Booten gegebenenfalls nach einer Drehung der Kassetten um 90° zur Ausrichtung der Bootsachse quer zur Regalgasse dem Regalbediengerät zugefördert werden, das in einer Regalgasse zwischen zwei Regalen in Längsrichtung der Regalgasse verfahren wird und eine Hebebühne mit einer zur Regalgasse senkrechten Querführung für die Kassette aufweist. Das Regalbediengerät wird daher in der Regalgasse bis zu dem zu bedienenden Regalfach verfahren und die Hebebühne auf die Höhe dieses Regalfachs angehoben, sodass die Kassette mit dem einzulagernden Boot entlang der Querführung von der Hebebühne in das Regalfach gefördert werden kann, das mit die Querführung fortsetzenden Fachführungen für die Kassette versehen ist. Bei der Entnahme eines Boots aus einem Regalfach wird in umgekehrter Reihenfolge die Kassette mit dem Boot aus dem jeweiligen Regalfach auf die Hebebühne gezogen und mit dem Regalbediengerät aus dem Bootslager zu dem an den Portalkran angeschossenen Schienensystem gefördert, sodass der Portalkran die Kassette mit dem ausgelagerten Boot erfassen und in das Wasser absenken kann. Nachteilig bei einem solchen Bootslager ist allerdings der durch das Regalbediengerät bedingte Konstruktionsaufwand, der die beim Beschleunigen und Abbremsen des Regalbediengeräts auftretenden Massenkräfte berücksichtigen muss.

Der Erfindung liegt somit die Aufgabe zugrunde, ein Bootslager vorzusehen, das auf der Grundlage einer vergleichsweise einfachen Konstruktion vorteilhafte Ein- und Auslagerungsbedingungen für die Boote gewährleistet.

Ausgehend von einem Bootslager der eingangs geschilderten Art löst die Erfindung die gestellte Aufgabe dadurch, dass die Bedieneinrichtung eine an einen Hubtrieb angeschlossene, sich über die Länge der Regalgasse erstreckende Hubbrücke mit einer Längsführung für die Kassette umfasst, dass auf der Hubbrücke wenigstens ein Hilfsrahmen mit einer zur Regalgasse senkrechten Querführung für die Kassette zwischen einer abgesenkten Ruhestellung und einer angehobenen Gebrauchsstellung verschiebbar lagert, wobei die Längsführung in der abgesenkten Ruhstellung die Querführung und in der angehobenen Gebrauchsstellung die Querführung die Längsführung der Höhe nach überragen, und dass zwischen dem Hilfsrahmen und den Regalfächern eine den Hilfsrahmen vertikal gegenüber den Regalfächern abstützende Verriegelungseinrichtung vorgesehen ist.

Da die Bedieneinrichtung eine sich über die Länge der zu bedienenden Regalgasse erstreckende Hubbrücke mit einer Längsführung für die Boote aufnehmende Kassetten besitzt, können die Kassetten einerseits über den Hubtrieb der Hubbrücke und anderseits mit Hilfe eines entsprechenden Stelltriebs entlang der Längsführung der Hubbrücke bis zum jeweiligen Regalfach gefördert werden. Das Vorsehen wenigstens eines Hilfsrahmens, der gegenüber der Hubbrücke vertikal verschiebbar gelagert ist und die Querführung zum Ein- und Auslagern der Kassetten in ein Regalfach und aus einem Regalfach bildet, ermöglicht eine wesentliche Konstruktionsvereinfachung, weil in der gegenüber der Hubbrücke abgesenkten Ruhestellung des Hilfsrahmens die gegenüber der Querführung des Hilfsrahmens der Höhe nach vorstehende Längsführung der Hubbrücke zum Einsatz kommt, während in der gegenüber der Hubbrücke angehobenen Gebrauchsstellung des Hilfsrahmens allein die Querführung der Hubbrücke wirksam wird, sodass eine Kassette nur entlang der Längsführung der Hubbrücke verlagert werden kann, solange der Hilfsrahmen nicht gegenüber der Hubbrücke angehoben wird. Diese relative Anhebung des Hilfsrahmens gegenüber der Hubbrücke tritt dann auf, wenn der Hilfsrahmen über die Verriegelungseinrichtung lastabtragend gegenüber dem jeweiligen Regalfach abgestützt und die Hubbrücke zugleich über den Stelltrieb in der Gebrauchsstellung des Hilfsrahmens weiter abgesenkt wird, wodurch die Kassette von der Längsführung der Hubbrücke auf die Querführung des Hilfsrahmens mit der Wirkung verlagert wird, dass nunmehr die Kassette entlang der Querführung vom Hilfsrahmen in das Regalfach ausgefördert werden kann. Voraussetzung hierfür ist somit, dass die Hubbrücke beim Ansteuern eines Regalfachs zunächst über die entsprechende Anschlussstellung nach oben hinaus angehoben wird, um durch ein nachfolgendes Absenken der Hubbrücke bei gegenüber dem Regalfach verriegeltem Hilfsrahmen die gegenüber dem Regalfach ausgerichtete Querführung des Hilfsrahmens einsetzen zu können.

Zur Auslagerung eines Boots braucht die Kassette mit dem Boot lediglich aus dem Regalfach auf die Querführung des gegenüber dem Regalfach verriegelten Hilfsrahmens verlagert zu werden, bevor die Hubbrücke angehoben und die Kassette unter einem Abheben von der Querführung des Hilfsrahmens von der Längsführung der Hubbrücke übernommen wird. Nach einem Lösen der Verriegelungseinrichtung kann dann die Hubeinrichtung über den Hubtrieb beliebig der Höhe nach verlagert werden.

Da es darauf ankommt, im Bereich des jeweiligen Regalfachs eine Querführung für die Kassettenbewegung zwischen dem Regalfach und der Hubbrücke sicherzustellen, kann die Hubbrücke einen sich über die Länge der Hubbrücke erstreckenden Hilfsrahmen mit Querführungen für jedes Regalfach einer Fachreihe aufweisen. Es ist aber ebenso möglich, für jedes Regalfach einer Fachreihe einen gesonderten Hilfsrahmen vorzusehen oder den Fächern einer Fachreihe gruppenweise einen Hilfsrahmen mit einer entsprechenden Anzahl von Querführungen zuzuordnen. Der nur abwechselnd mögliche Einsatz der Längsführung der Hubbrücke und der Querführungen des Hilfsrahmens oder der Hilfsrahmen in Abhängigkeit von der relativen Hublage des Hilfsrahmens bzw. der Hilfsrahmen gegenüber der Hubbrücke bleibt davon unberührt.

Obwohl hinsichtlich der Verriegelungseinrichtung unterschiedliche Ausführungsmöglichkeiten gegeben sind - es kommt ja vor allem auf die lastabtragende Abstützung des Hilfsrahmens gegenüber den Regalfächern bzw. den Regalen an -, können besonders günstige Konstruktionsverhältnisse dann erreicht werden, wenn die Verriegelungseinrichtung mit auf dem Hilfsrahmen gelagerten, um in Längsrichtung verlaufende Achsen nach oben anschlagbegrenzt ausschwenkbaren Riegeln versehen ist, die mit den Regalfächern zugeordneten Stützanschlägen zusammenwirken. Über die in die Anschlagstellung ausgeschwenkten Riegel kann der Hilfsrahmen in einfacher Art auf den Stützanschlägen lastabtragend abgestützt werden.

Um eine reibungsarme Förderung der Kassetten entlang der Längsführung der Hubbrücke zu erreichen, kann die Längsführung der Hubbrücke auf Schienen der Kassette abrollende Führungsrollen umfassen. Eine solche Konstruktion bietet außerdem eine einfache Seitenführung zwischen den Führungsrollen der Hubbrücke und den Schienen der Kassetten. In gleicher Weise können die Querführung des Hilfsrahmens auf Schienen der Kassette abrollende Führungsrollen aufweisen. Es bedarf daher nur mehr geeigneter Stelltriebe zur Verlagerung der Kassetten entlang der Längsführung der Hubbrücke und den wenigstens einem Hilfsrahmen zugehörigen Querführungen.

Während der Stelltrieb für die Längsverschiebung der Kassetten sich über eine Fachreihe der Regale erstrecken muss, weil die Kassetten jedem Regalfach einer solchen Fachreihe zuzufördern sind, bleibt der Verlagerungsweg entlang der Querführungen auf eine Breite der Kassetten beschränkt. Die Boote sind ja vorzugsweise mit ihrer Längsachse in Längsrichtung der Hubbrücke ausgerichtet. Für die Querverschiebung der Kassetten entlang der Querführungen des Hilfsrahmens können somit Stelltriebe zum Einsatz kommen, die sich nicht über die Breite des Hilfsrahmens erstrecken. Der Hilfsrahmen kann folglich auf seinen beiden Längsseiten um in Längsrichtung verlaufende Achsen abschwenkbare Stelltriebe aufweisen, die ein mit Mitnehmeranschlägen versehenes, endlos um Umlenkrollen geführtes Zugmittel aufweisen, wobei die Kassetten mit Gegenanschlägen für die Mitnehmeranschläge versehen sind. In der ausgeschwenkten Gebrauchsstellung der Stelltriebe kommt das Fördertrum des Zugmittels parallel zur Kassette zu liegen, sodass die Mitnehmeranschläge des Zugmittels mit den in einer zu den Mitnehmeranschlägen fluchtenden Reihe angeordneten Gegenanschlägen zusammenwirken und die Kassette entlang der Querführung vom Hilfsrahmen weg oder auf den Hilfsrahmen fördern. In der abgeschwenkten Ruhestellung kann sich kein Wirkungseingriff zwischen den Mitnehmeranschlägen der Stelltriebe und den Gegenanschlägen der Kassette ergeben.

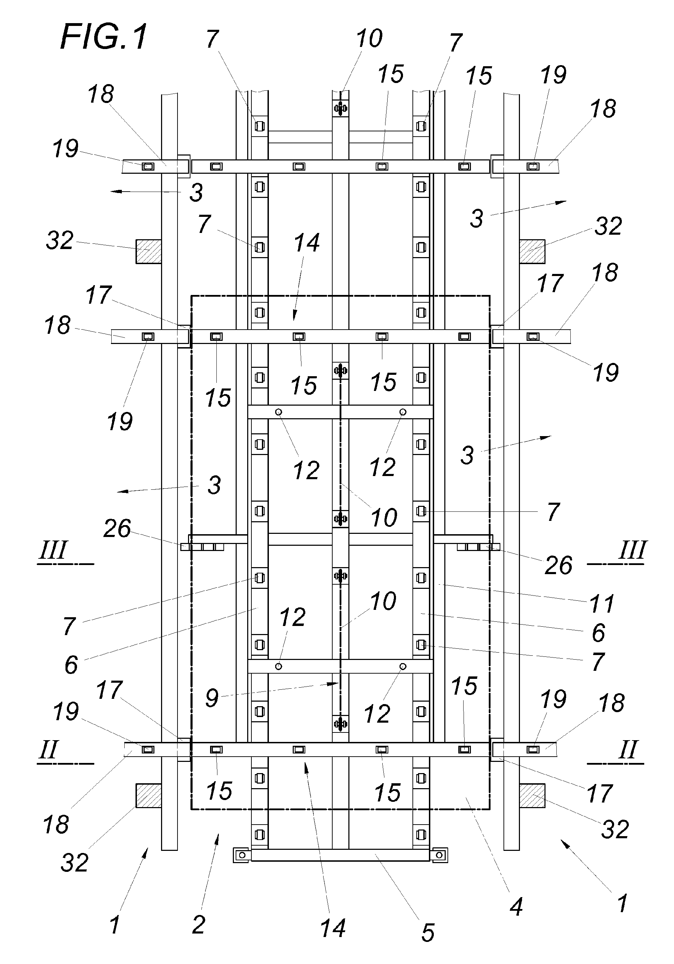

In der Zeichnung ist der Erfindungsgegenstand beispielsweise dargestellt. Es zeigen
- Fig. 1: ein erfindungsgemäßes Bootslager ausschnittsweise in einer schematischen Draufsicht,
- Fig. 2: dieses Bootslager in einem Schnitt nach der Linie II-II der Fig. 1 in einem größeren Maßstab und
- Fig. 3: einen Schnitt nach der Linie III-III der Fig. 1 ebenfalls in einem größeren Maßstab.

Ein Bootslager gemäß der Erfindung weist wenigstens zwei Regale 1 auf, die zwischen sich eine Regalgasse 2 bilden und aus neben- und übereinander angeordneten Regalfächern 3 aufgebaut sind, in die jeweils ein auf einer Kassette 4 abgestelltes Boot eingelagert werden kann. Zu diesem Zweck ist in der Regalgasse 2 zwischen den beiden Regalen 1 eine Hubbrücke 5 vorgesehen, die sich über die Länge der Regalgasse 2 erstreckt und über einen aus Übersichtlichkeitsgründen nicht dargestellten Hubtrieb zwischen den Fachreihen der Höhe nach verlagert werden kann. Als Hubtriebe können Zahnstangentriebe, Kettentriebe oder Spindeltriebe, aber auch Hubzylinder zum Einsatz kommen.

Die Hubbrücke 5 bildet eine sich in Längsrichtung erstreckende Längsführung 6 für die Kassetten 4 aus Führungsrollen 7, die auf Schienen 8 der Kassetten 4 abrollen. Zum Antrieb einer von der Hubbrücke 5 aufgenommenen Kassette 4 entlang der Längsführung 6 dient ein Stelltrieb 9, der gemäß dem dargestellten Ausführungsbeispiel aus einzelnen Kettentrieben 10 aufgebaut ist, die mit Gegenanschlägen auf der Unterseite der Kassette 4 zusammenwirkende Mitnehmeranschläge aufweisen, sodass die Kassetten 4 über diese Kettentriebe 10 entlang der Längsführungen 6 verfahren werden können.

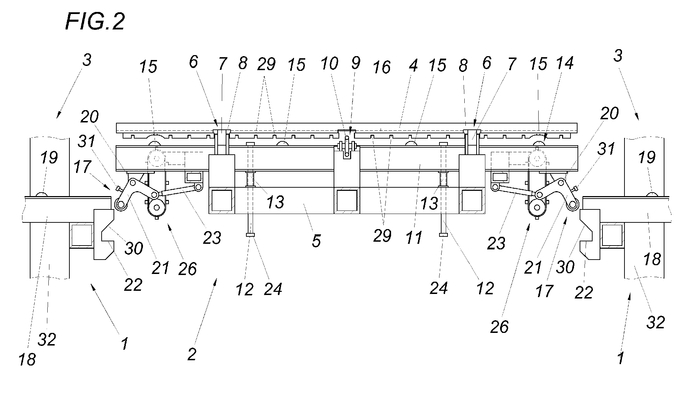

Zum Verfahren der Kassetten 4 senkrecht zur Längsführung 6 ist die Hubbrücke 5 mit wenigstens einem Hilfsrahmen 11 versehen, der gegenüber der Hubbrücke 5 vertikal verschiebbar gelagert ist. Zu diesem Zweck greift der Hilfsrahmen 11 mit Führungssäulen 12 in Führungshülsen 13 der Hubbrücke 5 ein. Der Hilfsrahmen 11 ist mit einer zur Längsführung 6 der Hubbrücke 5 senkrechten Querführung 14 versehen, die ähnlich der Längsführung 6 der Hubbrücke 5 Führungsrollen 15 umfasst, die auf Schienen 16 auf der Unterseite der Kassetten 4 abrollen. Aufgrund der vertikalen Verlagerung des Hilfsrahmens 11 gegenüber der Hubbrücke 5 überragt die Längsführung 6 in der gegenüber der Hubbrücke 5 abgesenkten Ruhestellung des Hilfsrahmens 11 die Querführung 14, wie dies in der Fig. 2 dargestellt ist. Dies bedeutet, dass die Kassette 4 unbehindert durch die Querführung 14 entlang der Längsführung 6 verfahren werden kann. Wird hingegen der Hilfsrahmen 11 gegenüber der Hubbrücke angehoben, so wird die Längsführung 6 der Hubbrücke 5 unter das Niveau der Querführung 14 des Hilfsrahmens 11 abgesenkt, sodass die Querführung 14 zum Einsatz kommt und die auf der Querführung 14 lagernde Kassette 4 entlang der Querführung 14 von der Hubbrücke 5 ausgefördert werden kann.

Um für die vertikale Relativbewegung des Hilfsrahmens 11 gegenüber der Hubbrücke 5 keine gesonderten Antriebe vorsehen zu müssen, ist zwischen dem Hilfsrahmen 11 und den Regalfächern 3 eine Verriegelungseinrichtung 17 vorgesehen, über die der Hilfsrahmen 11 lastabtragend gegenüber den Regalfächern 3 abgestützt werden kann. Mit der durch die Verriegelungseinrichtung 17 gegebenen Abstützung des Hilfsrahmens 11 gegenüber den Regalfächern 3 kann die Hubbrücke 5 über ihren Hubantrieb gegenüber dem abgestützten Hilfsrahmen 11 mit der Wirkung abgesenkt werden, dass die jeweils aufgenommene Kassette 4 von der Längsführung 6 der Hubbrücke 5 auf die Querführung 14 des Hilfsrahmens 11 abgelegt wird. In dieser gegenüber den Regalfächern verriegelten Gebrauchsstellung des Hilfsrahmens 11 kann die Kassette 4 vom Hilfsrahmen 11 auf die Querführung 14 fortsetzende Fachführungen 18 aufgeschoben werden, die mit entsprechenden Laufrollen 19 versehen sind.

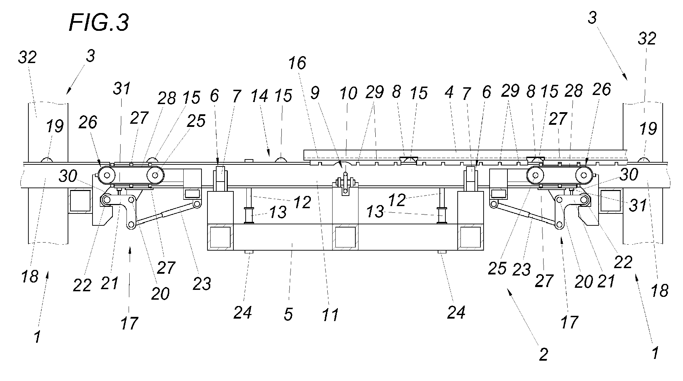

Um einfache Konstruktionsverhältnisse für die Verriegelungseinrichtugn 17 sicherzustellen, kann die Verriegelungseinrichtung 17 um in Längsrichtung verlaufende Achsen 20 nach oben anschlagbegrenzt ausschwenkbare Riegel 21 aufweisen, die mit den Regalfächern 3 zugeordneten Stützanschlägen 22 zusammenwirken und über Stellzylinder 23 betätigt werden können. Wird die Hubbrücke 5 gemäß der Fig. 2 gegenüber der Fachreihe, in die ein Boot eingelagert werden soll, abgesenkt, bis die im Verriegelungssinn beaufschlagten Riegel 21 an den Stützanschlägen 22 ein festes Widerlager finden, so wird der Hilfsrahmen 11 gegenüber der weiter nach unten bewegten Hubbrücke 5 zurückgehalten, bis die Absenkbewegung der Hubbrücke 5 durch die Anschläge 24 der Führungssäulen 12 beendet wird. In dieser in der Fig. 3 dargestellten Stellung ruht die Kassette 4 auf der Querführung 14 auf und kann unbehindert durch die Längsführung 6 auf die Fachführung 18 des jeweils ausgewählten Regalfachs 3 ausgeschoben werden.

Die Querbewegung der Kassette 4 entlang der Querführung 14 des Hilfsrahmens 11 wird gemäß dem Ausführungsbeispiel mit Hilfe von auf dem Hilfsrahmen 11 um eine in Längsrichtung verlaufende Achse 25 verschwenkbaren Stelltrieben 26 ermöglicht, die eine mit Mitnehmeranschlägen 27 versehenes endlos um Umlenkrollen geführtes Zugmittel 28 aufweisen. Diese Mitnehmeranschläge 27 wirken in der in der Fig. 3 dargestellten, ausgeschwenkten Arbeitsstellung, in der das Fördertrum des Zugmittels 27 parallel zur Querführung 14 verläuft, mit entsprechenden Gegenanschlägen 29 auf der Unterseite der Kassette 4 zusammen, sodass über die Mitnehmeranschläge 27 die Kassette 4 senkrecht zu der Längsführung 6 entlang der Querführung 14 verlagert wird. Es braucht wohl nicht besonders hervorgehoben zu werden, dass entweder die Mitnehmeranschläge 27 oder die Gegenanschläge 29 gegenüber den Gegenanschlägen 29 bzw. Mitnehmeranschlägen 27 vorstehen können.

Zum Auslagern eines Bootes aus einem der Regalfächer 3 ist in der in der Fig. 3 dargestellten Übernahmestellung für das jeweilige Regalfach 3 die Kassette 4 mit dem auszulagernden Boot über den zugehörigen Stelltrieb 26 entlang der Querführung 14 auf den Hilfsrahmen 11 zu fördern, bevor die Stelltriebe 26 entsprechend der Fig. 2 in eine Ruhestellung abgeschwenkt werden und die Hubbrücke 5 angehoben wird, wobei die Kassette 4 von der Längsführung 6 der Hubbrücke 5 übernommen wird. Bei einer Ausgestaltung der Stellzylinder 23 als pneumatische Zylinder kann die Entriegelung der Verriegelungseinrichtung 17 automatisch beim Anheben des Hilfsrahmens 11 durch die Hubbrücke 5 erfolgen, wenn für die Riegel 21 eine entsprechende Anlauffläche 30 vorgesehen ist, entlang der die Riegel 21 aus der Verriegelungsstellung ausgeschwenkt werden. Zur Einstellung der anschlagbegrenzten Verriegelungsstellung der Riegel 21 können diese mit einem verstellbaren Anschlag 31 versehen sein.

Nach der Entriegelung des Hilfsrahmens 11 kann die Kassette 4 mit Hilfe des Stelltriebs 9 für die Längsverschiebung der Kassetten 4 entlang der Längsführung 6 ans ein Ende der Hubbrücke 5 verfahren werden, um aus dem Bootslager ausgetragen und beispielsweise über einen Portalkran ins Wasser abgesenkt zu werden.

Die Hubbrücke 5 erstreckt sich über die Länge der Regalgasse 2, um die Kassetten 4 mit den Booten zu den einzelnen Regalfächern 3 verlagern zu können. Die Querförderung der Kassetten 4 zur Ein- und Auslagerung der Kassetten 4 erfolgt über den Hilfsrahmen 11, der sich entsprechend der Hubbrücke 5 ebenfalls über die gesamte Fachreihe erstrecken kann. In diesem Fall ist es erforderlich, den sich zwischen den Regalstehern 32 ergebenden Regalfächer 3 jeweils gesonderte Querführungen 14 zuzuordnen, die auf dem gemeinsamen Hilfsrahmen 11 angeordnet werden müssen. Es ist aber auch möglich, mehreren einzelnen Regalfächern oder Fachgruppen einer Fachreihe zugehörige Hilfsrahmen 11 mit entsprechenden Querführungen 14 auf der Hubbrücke 5 vorzusehen. Dies bedingt allerdings eine entsprechende Verriegelungseinrichtung 17 zwischen den Hilfsrahmen 11 und den Regalfächern 3 bzw. den Regalstehern 32, um die gesamte Last der Hubbrücke 5 mit dem Boot und der Kassette 4 über diese Verriegelungseinrichtung 17 auf die Regale beidseits der Regalgasse 2 abtragen zu können.

## Patentansprüche

1. Bootslager mit zwischen sich eine Regalgasse (2) bildenden Regalen aus neben- und übereinander angeordneten Regalfächern (3) und mit einer in der Regalgasse (2) vorgesehenen Bedieneinrichtung einerseits zum Heben und anderseits zum Verschieben einer ein Boot aufnehmenden Kassette (4) in Längsrichtung der Regalgasse (2) und senkrecht dazu, **dadurch gekennzeichnet, dass** die Bedieneinrichtung eine an einen Hubtrieb angeschlossene, sich über die Länge der Regalgasse (2) erstreckende Hubbrücke (5) mit einer Längsführung (6) für die Kassette (4) umfasst, dass auf der Hubbrücke (5) wenigstens ein Hilfsrahmen (11) mit einer zur Regalgasse (2) senkrechten Querführung (14) für die Kassette (4) zwischen einer abgesenkten Ruhestellung und einer angehobenen Gebrauchsstellung verschiebbar lagert, wobei die Längsführung (6) in der abgesenkten Ruhstellung die Querführung (14) und in der angehobenen Gebrauchsstellung die Querführung (14) die Längsführung (6) der Höhe nach überragen, und dass zwischen dem Hilfsrahmen (11) und den Regalfächern (3) eine den Hilfsrahmen (11) vertikal gegenüber den Regalfächern (3) abstützende Verriegelungseinrichtung (17) vorgesehen ist.

2. Bootslager nach Anspruch 1, **dadurch gekennzeichnet, dass** die Verriegelungseinrichtung (17) auf dem Hilfsrahmen (11) gelagerte, um in Längsrichtung verlaufende Achsen (20) nach oben anschlagbegrenzt ausschwenkbare Riegel (21) aufweist, die mit den Regalfächern (3) zugeordneten Stützanschlägen (22) zusammenwirken.

3. Bootslager nach Anspruch 1 oder 2, **dadurch gekennzeichnet, dass** die Längsführung (6) der Hubbrücke (5) auf Schienen (8) der Kassette (4) abrollende Führungsrollen (7) umfasst.

4. Bootslager nach einem der Ansprüche 1 bis 3, **dadurch gekennzeichnet, dass** die Querführung (14) des Hilfsrahmens (11) auf Schienen (16) der Kassette (4) abrollende Führungsrollen (15) umfasst.

5. Bootslager nach einem der Ansprüche 1 bis 4, **dadurch gekennzeichnet, dass** der Hilfsrahmen (11) auf den beiden Längsseiten um in Längsrichtung verlaufende Achsen (25) abschwenkbare Stelltriebe (26) aufweist, die ein mit Mitnehmeranschlägen (27) versehenes, endlos um Umlenkrollen geführtes Zugmittel (28) aufweisen, und dass die Kassette (4) mit Gegenanschlägen (29) für die Mitnehmeranschläge (27) versehen sind.
